# EUROPÄISCHE PATENTSCHRIFT

(11) **EP 3 121 483 B1**
(45) Veröffentlichungstag und Bekanntmachung des Hinweises auf die Patenterteilung: **04.12.2019**
(21) Anmeldenummer: 16178262.8
(22) Anmeldetag: 06.07.2016
(51) Int. Cl.: F16H 3/00, F16H 3/093, F16H 3/08

(54) **DOPPELKUPPLUNGSGETRIEBE**
DOUBLE CLUTCH TRANSMISSION
BOÎTE DE VITESSES À DOUBLE EMBRAYAGE

(30) Priorität: 23.07.2015 DE 102015213923
(43) Veröffentlichungstag der Anmeldung: 25.01.2017
(73) Patentinhaber: Volkswagen Aktiengesellschaft, 38440 Wolfsburg (DE)
(72) Erfinder: Müller, Frank, 38165 Essenrode (DE); Grünewald, Johannes, 38170 Schöppenstedt (DE)

(56) Entgegenhaltungen:
- EP-A1- 1 729 033
- WO-A1-2012/055382
- DE-A1-102011 089 736
- DE-A1-102012 024 091

## Beschreibung

Die Erfindung betrifft ein Doppelkupplungsgetriebe für ein Kraftfahrzeug mit den Merkmalen des Oberbegriffs des Patentanspruchs 1.

Bei Doppelkupplungsgetrieben, die insbesondere als Windungsgetriebe ausgebildet sind, sind mehrere Vorwärtsgänge schaltbar, wobei mindestens ein Vorwärtsgang als Windungsgang ausgebildet ist und sich der Leistungsfluss des Windungsganges über mehrere Zahnradstufen, insbesondere über zumindest zwei Zahnradstufen windet. Die im Stand der Technik bekannten Doppelkupplungsgetriebe weisen zwei Getriebeeingangswellen und zwei Triebwellen auf, wobei zwischen den Getriebeeingangswellen und den Triebwellen mehrere Zahnräder kämmend angeordnet sind, insbesondere sind hier einige der Zahnräder als Losräder und andere Zahnräder als Festräder ausgebildet, wobei insbesondere durch zwei kämmende Zahnräder insbesondere eine jeweilige Zahnradstufe, bspw. die erste, zweite, dritte Gangstufe usw. gebildet ist. Es sind nun auch Doppelkupplungsgetriebe bekannt, wobei die miteinander kämmenden Zahnräder nun so angeordnet sind, so dass zumindest zwei sogenannte "Doppelradebenen" innerhalb des Doppelkupplungsgetriebes ausgebildet sind. Eine Doppelradebene ist insbesondere durch ein auf einer Getriebeeingangswelle angeordnetes Zahnrad gebildet, das insbesondere mit je einem Zahnrad jeder der beiden Triebwellen kämmt, also insbesondere zugleich mit zwei Zahnrädern kämmt.

So ist aus der DE 10 2009 002 357 A1 ein Doppelkupplungsgetriebe für ein Kraftfahrzeug bekannt, dass zwei Reibkupplungen, zwei Getriebeeingangswellen und zwei Triebwellen sowie mehrere Synchronisiervorrichtungen aufweist. Die erste Getriebeeingangswelle ist über eine erste Reibkupplung und die zweite Getriebeeingangswelle ist über eine zweite Reibkupplung mit einem Antriebsmotor verbindbar bzw. verbunden. Den beiden Getriebeeingangswellen sind jeweils drei Festräder zugeordnet, den Triebwellen sind Losräder zugeordnet. Bei bestimmten hier für dieses Doppelkupplungsgetriebe gezeigten Ausführungsformen kämmen zwei auf der äußeren Getriebeeingangswelle angeordnete äußere Festräder jeweils mit zwei entsprechenden Losrädern auf den beiden Triebwellen und bilden daher zwei Doppelradebenen. Zur Realisierung eines Rückwärtsganges ist in der einen Doppelradebene ein Zwischenrad zwischengeschaltet (zur Drehumkehrung und damit zur Realisierung eines Rückwärtsganges). Die entsprechenden Synchronisiervorrichtungen sind auf den Triebwellen angeordnet. Das hier bekannte Doppelkupplungsgetriebe weist acht Vorwärtsgänge auf und ist für eine Front-Quer-Bauweise in einem Kraftfahrzeug geeignet bzw. ausgebildet.

Aus der DE 10 2009 002 348 A1 ist ein ähnliches (wie das zuvor beschriebene) Doppelkupplungsgetriebe mit ebenfalls zwei Doppelradebenen und insgesamt sechs Radebenen bekannt. Auch bei diesem Doppelkupplungsgetriebe sind acht Vorwärtsgänge vorgesehen. Auch dieses Doppelkupplungsgetriebe eignet sich für eine Front-Quer-Bauweise in einem Kraftfahrzeug.

Aus der DE 10 2007 049 265 A1 ist ein Doppelkupplungsgetriebe mit zwei Reibkupplungen, zwei Getriebeeingangswellen und zwei Triebwellen bekannt. Den Getriebeeingangswellen sind jeweils zwei Festräder zugeordnet, wobei entsprechende kämmende Losräder auf den Triebwellen angeordnet sind. Es sind insgesamt vier doppelt wirkende Synchronsiervorrichtungen zwischen jeweils benachbarten Losrädern auf den Triebwellen angeordnet. Hierdurch sind vier Doppelradebenen realisiert. Es ergeben sich mindestens acht lastschaltbare Vorwärtsgänge und zumindest ein Rückwärtsgang.

Aus der DE 10 2012 024 091 A1 ist ein Doppelkupplungsgetriebe mit einer auf einer der beiden Getriebeeingangswellen angeordneten Hohlwelle mit zwei Festrädern bekannt. Eines der Festräder kämmt mit je einem weiteren Losrad jeder der Triebwelle und das andere Festrad kämmt mit einer auf einer Triebwelle angeordneter Hohlwelle.

Schließlich ist aus der WO 2012/055382 A1 ein Doppelkupplungsgetriebe für Front-Quer-Anwendungen bekannt. Es sind hier zwei Reibkupplungen, zwei Getriebeeingangswellen und zwei Triebwellen vorgesehen. Auf der zweiten, hier äußeren Getriebeeingangswelle ist eine weitere Welle derart angeordnet, dass sich die beiden Getriebeeingangswellen und die weitere Welle koaxial zueinander erstrecken. Auf der weiteren Welle sind zwei Festräder angeordnet. Die weitere Welle lässt sich über eine Synchronisiervorrichtung drehfest mit der äußeren Getriebeeingangswelle verbinden. Die innere und die äußere Getriebeeingangswelle verfügen zudem über jeweils ein Festrad. Hierdurch ergeben sich insgesamt vier Radebenen, die als Doppelradebenen ausgebildet sind, wobei entsprechende Zahnräder mit entsprechenden, den Triebwellen zugeordneten Zahnrädern kämmen. Bei diesem Doppelkupplungsgetriebe sind mehrere Windungsgänge realisierbar, wobei sich acht bzw. neun, insbesondere lastschaltbare Vorwärtsgänge realisieren lassen. Die Stufensprünge der Übersetzung der ersten sechs Vorwärtsgänge sind dabei abnehmend. Insbesondere weist jede Triebwelle ein als Festrad ausgebildetes Abtriebsritzel auf, das an einem Kopfende der Triebwelle angeordnet ist, wobei jedes Abtriebsritzel jeder Triebwelle mit dem gleichen Achsantriebszahnrad einer Abtriebswelle kämmt.

Das Doppelkupplungsgetriebe, von dem die Erfindung ausgeht (WO 2012/055382 A1) ist aber noch nicht optimal ausgebildet. Einerseits ist dieses insbesondere für den Front-Quer-Einbau in einem Kraftfahrzeug ausgebildet, andererseits für bestimmte Anwendungen und/oder bei bestimmten Ausführungen nicht anwendbar bzw. nicht einsetzbar. Beispielsweise werden auch Doppelkupplungsgetriebe mit zehn Gangstufen bzw. mit zehn Vorwärtsgängen benötigt, die dann aber für den Längseinbau geeignet sein müssen. Auch der hier zur Verfügung stehende Bauraum ist im Wesentlichen in Abhängigkeit des jeweiligen Kraftfahrzeuges begrenzt, so dass derartige Doppelkupplungsgetriebe auch im Wesentlichen entsprechend kompakt ausgeführt werden müssen. Zusätzlich ist die Flexibilität der Ausbildung und Anordnung der Zahnräder bzw. der einzelnen Gangstufen des im Stand der Technik bekannten Doppelkupplungsgetriebes begrenzt. Insbesondere sind hier die einzelnen Achsabstände beispielsweise die Achsabstände der einzelnen Triebwellen zu den Getriebeeingangswellen für den Längseinbau nicht optimal, insbesondere weil die am Kopfende der Triebwellen angeordneten Abtriebsritzel, die mit einem gemeinsamen Antriebszahnrad auf der Abtriebswelle kämmen, eine flexiblere Ausgestaltung der Zahnradstufen/Gangstufen und/oder der jeweiligen Achsabstände zueinander nicht zulassen.

Der Erfindung liegt daher die Aufgabe zugrunde, das eingangs genannte Doppelkupplungsgetriebe nun derart auszugestalten und weiterzubilden, so dass ein kompaktbauendes Doppelkupplungsgetriebe realisiert ist, das insbesondere auch für den Längseinbau in einem Kraftfahrzeug geeignet ist, wobei insbesondere eine große Flexibilität bezüglich der zu realisierenden Zahnradstufen/Gangstufen und der zu realisierenden Achsabstände realisiert ist.

Diese der Erfindung zugrunde liegende Aufgabe ist nun zunächst durch die Merkmale des Patentanspruches 1 gelöst.

Zunächst ist nämlich nun mindestens eine Doppelradebene aufgeteilt ausgebildet. Hierzu weist diese aufgeteilte Doppelradebene ein auf einer der beiden Getriebeeingangswellen angeordnetes Losrad mit zwei separat ausgebildeten Übersetzungsstufen auf. Nun kann das erste und das zweite Abtriebsritzel im Wesentlichen in der Ebene des Losrades angeordnet werden, nämlich zwischen den beiden Übersetzungsstufen des Losrades. Dies führt zunächst dazu, dass das erste und zweite Abtriebsritzel - nicht mehr wie bisher im Stand der Technik - am Kopfende einer Triebwelle angeordnet ist, sondern nun mit Hilfe des Losrades und den zwei separat ausgebildeten Übersetzungsstufen nun auch Raum geschaffen ist für eine andere Anordnung der beiden Abtriebsritzel, nämlich im Wesentlichen zwischen den beiden Übersetzungsstufen des Losrades. Insbesondere kämmt das erste und zweite Abtriebsritzel dann jeweils mit einem separaten auf einer - ersten - Abtriebswelle angeordnetem Achsantriebszahnrad. Anders ausgedrückt, dem ersten und dem zweiten Abtriebsritzel ist jeweils ein jeweiliges einzelnes erstes und zweites Achsantriebszahnrad zugeordnet. Aufgrund dieser Anordnung/Ausbildung des Doppelkupplungsgetriebes ist dessen Flexibilität erhöht, einerseits können die Gangstufen insbesondere nun zehn Gangstufen (Vorwärtsgänge), insbesondere zumindest teilweise als Windungsgänge, leicht realisiert werden, andererseits eignet sich dieses Doppelkupplungsgetriebe auch für den Längseinbau in einem Kraftfahrzeug, insbesondere können nämlich nun die Achsabstände der Getriebeeingangswellen zu den Triebwellen und/oder der einzelnen Triebwellen zur Abtriebswelle optimal realisiert werden, da mit Hilfe des ersten und zweiten Abtriebsritzels und des jeweils hierfür angeordneten jeweiligen Achsantriebszahnrades, insbesondere eines ersten und zweiten Achsantriebszahnrades, die jeweiligen Abstände und Übersetzungen optimal realisiert werden können.

Die erste Übersetzungsstufe des Losrades kämmt mit einem auf der ersten Triebwelle angeordneten Zahnrad, wobei die zweite Übersetzungsstufe mit einem auf der zweiten Triebwelle angeordneten Zahnrad kämmt. Die erste und zweite Übersetzungsstufe ist axial in einem bestimmten Abstand zueinander angeordnet. Hierdurch wird realisiert, dass ein über die so aufgeteilte Doppelradebene realisierter Leistungsfluss im Wesentlichen auch "aufteilbar" ist, nämlich in einen ersten und in einen zweiten Leistungsflusspfad, wobei ein Leistungsflusspfad von einer Triebwelle zur Getriebeeingangswelle der andere Leistungsflusspfad von der Getriebeeingangswelle auf die andere Triebwelle führt, wobei die Leistungsflusspfade zueinander in einem bestimmten Abstand axial versetzt sind und wobei dieser axiale Abstand durch den Abstand der beiden Übersetzungsstufen des Losrades bestimmt ist. Beispielsweise wird beim erfindungsgemäßen Doppelkupplungsgetriebe auf diese Art und Weise die achte Gangstufe als Windungsgang mit Hilfe der dann aufgeteilten Doppelradebene realisiert, was im Folgenden noch näher erläutert werden wird.

Bevorzugt ist die erste Übersetzungsstufe des Losrades im Wesentlichen gleich der zweiten Übersetzungsstufe ausgeführt, denkbar ist aber auch, dass die erste Übersetzungsstufe unterschiedlich zur zweiten Übersetzungsstufe ausgeführt ist. Dies ist abhängig von der jeweiligen spezifischen Ausführungsform des jeweiligen Doppelkupplungsgetriebes sowie der gewünschten bzw. realisierten Gesamtübersetzung.

Insbesondere aufgrund der oben beschriebenen Anordnung der Abtriebsritzel bzw. der Ausbildung der jeweiligen Achsantriebszahnräder kann die erste Triebwelle unterhalb der Getriebeeingangswellen und die zweite Treibwelle und die erste Abtriebswelle oberhalb der Getriebeeingangswellen angeordnet werden, wobei die Achsabstände der beiden Triebwellen zur Abtriebswelle und/oder zum Differential im Wesentlichen nun gleich ausgebildet sind. Die erste Abtriebswelle liegt im Wesentlichen horizontal gegenüber den Getriebeeingangswellen, wobei die erste und zweite Triebwelle etwa vertikal zueinander angeordnet sind. Vorteilhaft ist der Abstand der ersten unten liegenden Triebwelle von den Getriebeeingangswellen kleiner als der Abstand der zweiten unten liegenden Triebwelle von denen. Dadurch ist u. a. auch eine relativ niedrige Lage der Abtriebswelle ermöglicht, was sich in einem niedrigen Schwerpunkt des Getriebes wiederspiegelt. Dadurch ist eine kompakte Ausbildung eines Doppelkupplungsgetriebes für den Längseinbau in einem Kraftfahrzeug realisiert, wobei zugleich eine Flexibilität für die Ausbildung der Gangstufen ermöglicht ist.

Das Losrad kann insbesondere auch als eine Hohlwelle ausgebildet sein, wobei die beiden Übersetzungsstufen dann als Festräder auf dieser Hohlwelle ausgebildet sind. Hierdurch ist einerseits eine verbindungssteife Ausführung ermöglicht, wobei die axialen Abstände der beiden Übersetzungsstufen, je nach Anwendungsfall, auch unterschiedlich ausgebildet sein können. Weiterhin können auch bestimmte unterschiedliche axiale Abstände der beiden Übersetzungsstufen zueinander auf einfache Weise realisiert werden.

Zusätzlich zu der zuvor genannten - ersten - Abtriebswelle kann insbesondere eine zweite Abtriebswelle vorgesehen sein. Insbesondere ist die zuvor genannte erste Abtriebswelle für einen Hinterradantrieb ausgebildet, wobei dann die zweite Abtriebswelle insbesondere für einen Vorderradantrieb vorgesehen ist (denkbar ist auch der umgekehrte Fall). Die zweite Abtriebswelle ist insbesondere drehwirksam mit der ersten Triebwelle über entsprechend miteinander kämmende Ritzel verbunden, was im Folgenden noch näher erläutert werden wird.

Von besonderem Vorteil ist auch, dass im Getriebegehäuse des Doppelkupplungsgetriebes eine Mittelplatte zur Lagerung der Getriebeeingangswellen, der Triebwellen und/oder auch der - ersten - Abtriebswelle vorgesehen ist. Die zuvor genannten jeweiligen Wellen sind an dieser Mittelplatte im Wesentlichen in einer vorzugsweise im Wesentlichen gleichen Ebene, insbesondere in einer gleichen Wirkebene über hier entsprechend angeordnete Loslager gelagert bzw. abgestützt. Hierdurch ist eine einfache Montage des Doppelkupplungsgetriebes realisiert, einerseits sind die jeweiligen Wellen an einer Getriebeseite über Festlager gelagert bzw. abstützbar, wobei an der anderen Getriebeseite mittig dann die beiden Reibkupplungen und der Antriebsmotor angebunden werden.

Das auf der zweiten Triebwelle angeordnete zweite Abtriebsritzel ist insbesondere als ein Losrad auf der zweiten Triebwelle angeordnet, wobei mit Hilfe des zweiten Abtriebsritzels die Parksperrenfunktion realisierbar ist. Die Positionierung der "Parksperre" an dieser Position geht im Wesentlichen auch konform mit anderen Getriebekonzepten.

Schließlich ist die Ausbildung/Ausführung der Gangstufen, insbesondere sind die hier realisierten Rückwärtsgänge bzw. Vorwärtsgänge sehr flexibel und optimal realisierbar. Insbesondere ist zumindest ein Rückwärtsgang, die erste, die achte und/oder die zehnte Gangstufe als Windungsgang ausgeführt, was im Folgenden auch noch näher erläutert werden darf.

Im Ergebnis sind nun die eingangs genannten Nachteile vermieden und entsprechende Vorteile erzielt.

Es gibt nun eine Vielzahl von Möglichkeiten, das erfindungsgemäße Doppelkupplungsgetriebe in vorteilhafter Art und Weise auszugestalten und weiterzubilden. Hierfür darf zunächst auf die dem Patentanspruch 1 nachgeordneten Patentansprüche verwiesen werden. Im Folgenden darf eine bevorzugte Ausgestaltung der Erfindung anhand der Zeichnung und der dazugehörigen Beschreibung näher erläutert werden. In der Zeichnung zeigt:
- Fig. 1: in einer schematischen, strukturellen Darstellung das erfindungsgemäße Doppelkupplungsgetriebe in einer ersten Ansicht,
- Fig. 2: in schematischer, struktureller Darstellung das erfindungsgemäße Doppelkupplungsgetriebe in einer zweiten Ansicht, insbesondere mit Darstellung der hier mittig vorgesehen Abtriebswelle, jedoch ohne die Darstellung der Getriebeeingangswellen,
- Fig. 3: in schematischer Darstellung eine Seitenansicht des erfindungsgemäßen Doppelkupplungsgetriebes mit Darstellung der Getriebeeingangswellen, der Triebwellen, einer ersten und zweiten Abtriebswelle sowie des Differentials und der Mittelplatte,
- Fig. 4a und 4b: in einer Frontansicht das erfindungsgemäße Doppelkupplungsgetriebe in schematischer Darstellung mit den Getriebeeingangswellen, den Triebwellen und der relativen Lage der Wellen zueinander (vgl. Fig. 4a) sowie der jeweiligen Achsabstände (vgl. Fig. 4b) in schematischer Darstellung, und
- Fig. 5: eine Schalttabelle korrespondierend zur Fig. 1 zur Verdeutlichung der Schaltpositionen der einzelnen Sychronisiervorrichtungen zur Realisierung der Leistungsflüsse der unterschiedlichen Gangstufen bzw. der Windungsgänge.

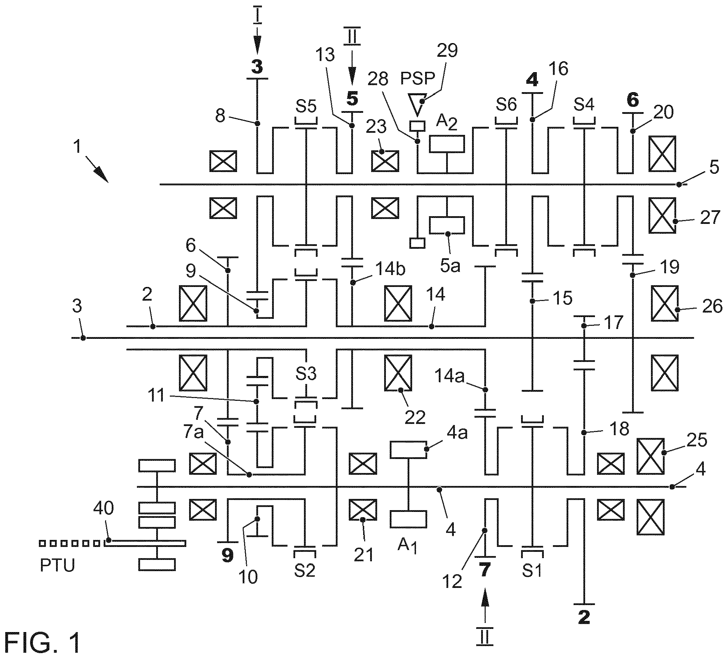

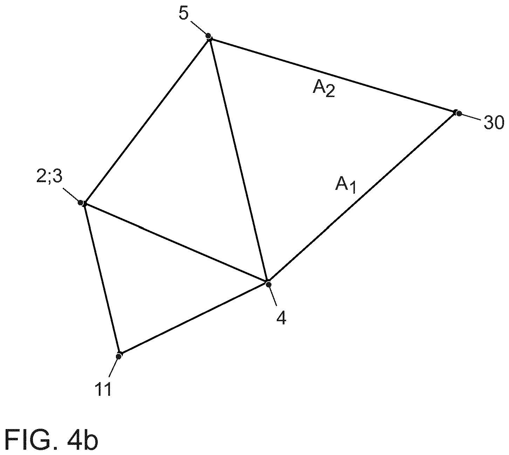

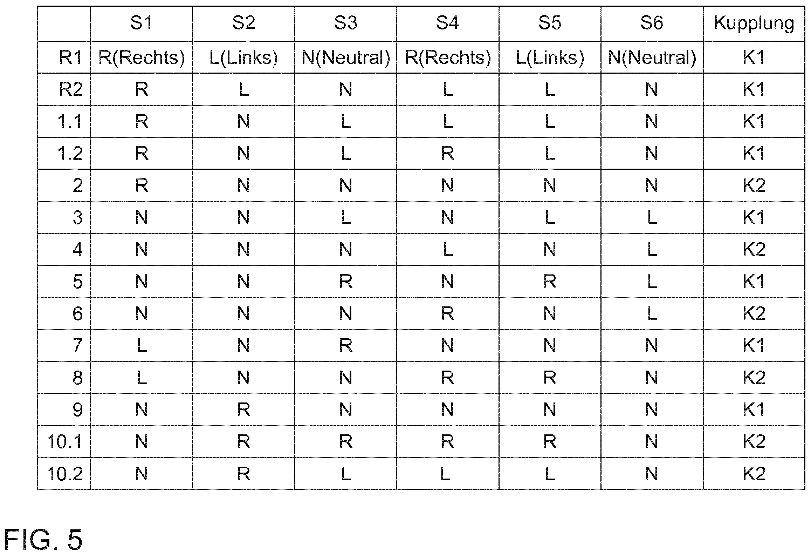

In den Fig. 1 bis 3 bzw. 4a ist ein Doppelkupplungsgetriebe 1 für ein nicht näher dargestelltes Kraftfahrzeug dargestellt. Die Fig. 4b zeigt die Achsabstände der jeweiligen Wellen bzw. deren geometrische Anordnung und die Fig. 5 eine Schalttabelle zur Realisierung der jeweiligen Gangstufen bzw. der jeweiligen Gangstufen als Windungsgänge (bzw. der Leistungsflüsse der jeweiligen eingelegten Gangstufen/realisierten Windungsgänge), was im Folgenden auch noch näher erläutert werden wird.

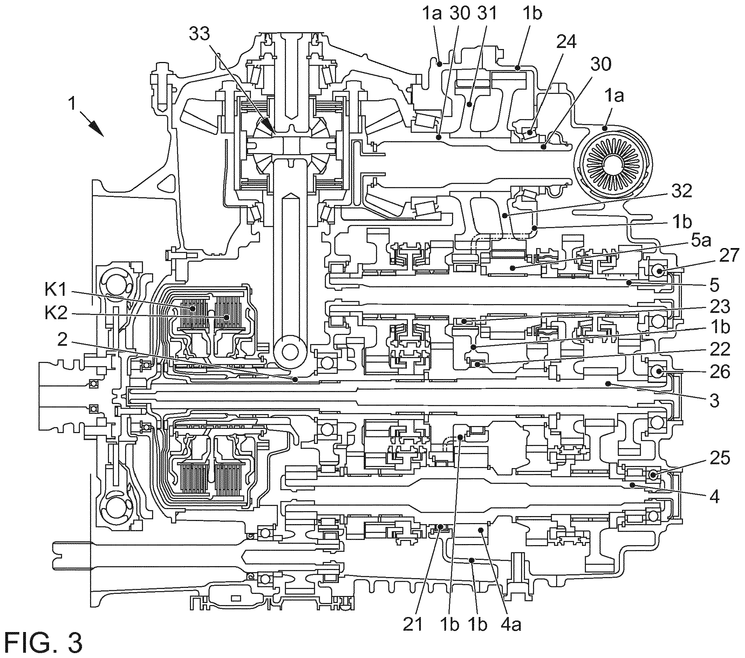

Das Doppelkupplungsgetriebe 1 weist eine erste Getriebeeingangswelle 2 und eine zweite Getriebeeingangswelle 3 auf. Die beiden Getriebeeingangswellen 2 und 3 sind koaxial zueinander angeordnet. Die erste Getriebeeingangswelle 2 ist hier als Hohlwelle und die zweite Getriebeeingangswelle 3 insbesondere als Vollwelle ausgebildet, wobei die zweite Getriebeeingangswelle 3 die erste Getriebeeingangswelle 2 hier im Wesentlichen durchgreift. Es ist jedoch auch denkbar, dass die zweite Getriebeeingangswelle 3 ebenfalls als Hohlwelle ausgebildet ist. Die erste Getriebeeingangswelle 2 ist über eine nur in Fig. 3 dargestellte erste Reibkupplung K1 und die zweite Getriebeeingangswelle 3 ist über eine nur in Fig. 3 dargestellte zweite Reibkupplung K2 mit einem Antriebsmotor (nicht im Einzelnen dargestellt) verbindbar oder verbunden. Je nach dem Schalten bzw. Öffnen/Schließen der Reibkupplungen K1 bzw. K2 kann so das Antriebsmoment auf die erste Getriebeeingangswelle 2 oder auf die zweite Getriebeeingangswelle 3 übertragen werden.

Das Doppelkupplungsgetriebe 1 weist hier insbesondere zwei Triebwellen 4 und 5 auf, die erste Triebwelle 4 ist hier insbesondere unterhalb der beiden Getriebeeingangswellen 2 und 3 und die zweite Triebwelle 5 insbesondere oberhalb der beiden Getriebeeingangswellen 2 und 3 gelagert bzw. angeordnet. Weiterhin weist das Doppelkupplungsgetriebe 1 nun jeweils mehrere Zahnräder und mehrere Sychronisiervorrichtungen auf. Die jeweiligen Zahnräder verbinden nun drehwirksam die erste und zweite Triebwelle 4 bzw. 5 mit der jeweiligen entsprechenden Getriebeeingangswelle 2 bzw. 3 in Form von bestimmten Zahnradpaarungen.

Die Zahnräder sind hier im Wesentlichen derart kämmend angeordnet, dass mehrere Vorwärtsgänge, hier insgesamt zehn Gangstufen (als Vorwärtsgänge) mittels der Synchronisiervorrichtungen (S1 bis S6) im Einzelnen als Vorwärtsgänge, insbesondere teilweise als Windungsgänge schaltbar sind. Mindestens ein Vorwärtsgang der zehn Gangstufen (Vorwärtsgänge) ist hierbei als Windungsgang ausgebildet, wobei sich ein Leistungsfluss des Windungsganges über mehrere Zahnradstufen windet. Hierbei wird eine Zahnradstufe im Wesentlichen durch zwei kämmende Zahnräder gebildet.

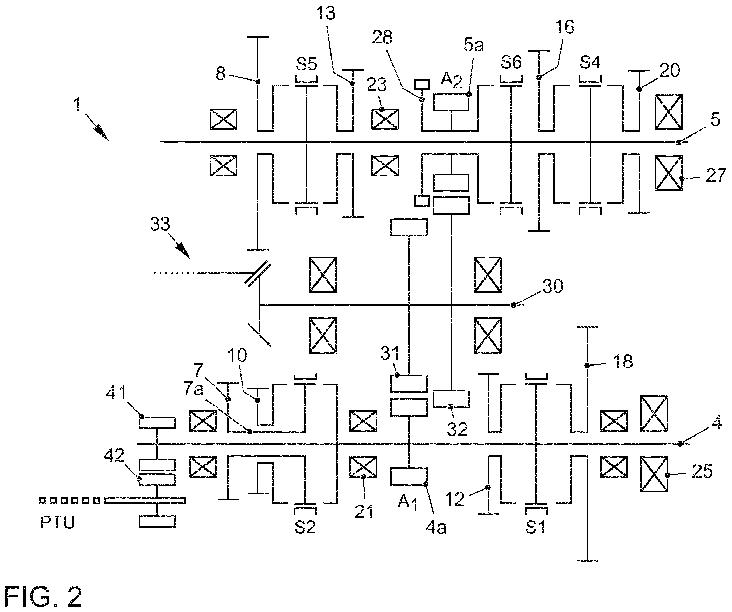

Wie die Fig. 1 und 2 deutlich machen, sind durch bestimmte Zahnräder bei dem Doppelkupplungsgetriebe 1 nun zwei Doppelradebenen I und II vorgesehen, wobei hier bestimmte Zahnräder jeweils eine Doppelradebene bilden, was im Folgenden noch näher erläutert werden wird. Weiterhin weist die erste Triebwelle 4 ein erstes Abtriebsritzel 4a und die zweite Triebwelle 5 ein zweites Abtriebsritzel 5a auf.

Zunächst weist die erste Getriebeeingangswelle 2 ein Zahnrad 6 auf, das mit einem auf der ersten Triebwelle 4 angeordnetem Zahnrad 7 kämmt. Das Zahnrad 6 ist hier als Festrad und das Zahnrad 7 als Losrad ausgebildet. Eine erste Doppelradebene I wird nun gebildet durch ein auf der zweiten Triebwelle 5 angeordnetes Zahnrad 8, das hier als Losrad ausgebildet ist, durch ein Zahnrad 9, das auf der ersten Getriebeeingangswelle 2 angeordnet und als Losrad ausgebildet ist, sowie durch ein weiteres Zahnrad 10, das als Losrad ausgebildet ist und auf einem Achsstummel 7a des Zahnrades 7 angeordnet ist. Die Zahnräder 9 und 10 sind über ein Zwischenrad bzw. ein Rücklaufrad 11 miteinander drehwirksam verbindbar, die Zahnräder 8 und 9 kämmen miteinander. Die erste Doppelradebene I wird daher im Wesentlichen gebildet durch die Zahnräder 8, 9, 11 und 10, so wie aus der Fig. 1 ersichtlich.

Eine zweite Doppelradebene II wird nun im Wesentlichen gebildet aus einem auf der ersten Triebwelle 4 angeordneten Zahnrad 12, das auf der ersten Triebwelle 4 als Losrad angeordnet ist, aus einem auf der zweiten Triebwelle 5 angeordnetem Zahnrad 13, das auf der zweiten Triebwelle 5 als Losrad angeordnet ist, und aus einem diese beiden Zahnräder 12 und 13 drehwirksam miteinander verbindendem Losrad 14, das hier insbesondere auf der zweiten Getriebeeingangswelle 3 angeordnet ist.

Die eingangs genannten Nachteile sind nun nämlich zunächst dadurch vermieden, dass mindestens eine Doppelradebene, hier insbesondere die zweite Doppelradebene II "aufgeteilt" ausgebildet ist, nämlich diese aufgeteilte Doppelradebene II ein auf einer der beiden Getriebeeingangswellen, hier der zweiten Getriebeeingangswelle 3 angeordnetes Losrad 14 mit zwei separat ausgebildeten Übersetzungsstufen 14a und 14b aufweist.

Fig. 1 zeigt deutlich, dass auf der zweiten Getriebeeingangswelle 3 angeordnete Losrad 14 mit der ersten und der zweiten Übersetzungsstufe 14a bzw. 14b. Zur Realisierung der zweiten Doppelradebene II kämmt die Übersetzungsstufe 14a mit dem Zahnrad 12 und die Übersetzungsstufe 14b mit dem Zahnrad 13. Weiterhin ist nun aufgrund der Ausbildung des Losrades 14 und der Übersetzungsstufen 14a und 14b das erste und zweite Abtriebsritzel 4a bzw. 5a der ersten und zweiten Triebwelle 4 und 5 im Wesentlichen in der Ebene des Losrades 14 anordenbar bzw. angeordnet, wobei das erste und das zweite Abtriebsritzel 4a und 5a jeweils mit einem separaten auf einer - ersten - Abtriebswelle 30 angeordneten Achsantriebszahnrad 31 und 32 kämmt, so wie dieses aus der Fig. 2 ersichtlich ist. Anders ausgedrückt, das erste Abtriebsritzel 4a kämmt mit einem ersten Achsantriebszahnrad 31 und das zweite Abtriebsritzel 5a kämmt mit einem zweiten Achsantriebszahnrad 32, wobei die beiden Achsantriebszahnräder 31 und 32 als Festräder auf der - ersten - Abtriebswelle 30 ausgebildet sind, so wie dieses insbesondere aus der Fig. 2 ersichtlich.

Dadurch, dass die zweite Doppelradebene II hier "aufgeteilt" ist, nämlich insbesondere durch die Ausbildung des Losrades 14 mit den axial zueinander beabstandeten Übersetzungsstufen 14a und 14b kann nun ein Leistungsfluss, insbesondere zur Realisierung der achten Gangstufe, was im Folgenden noch näher erläutert werden wird, "aufgeteilt" werden. Der Leistungsfluss der zweiten Doppelradebene II wird aufgeteilt in einen ersten Leistungsflusspfad, realisiert durch das Zahnrad 12 und die erste Übersetzungsstufe 14a, sowie in den zweiten Leistungsflusspfad, realisiert durch die zweite Übersetzungsstufe 14b und das Zahnrad 13, wobei die beiden Leistungsflusspfade zueinander entsprechend axial verschoben bzw. beabstandet sind, also der Leistungsfluss der zweiten Doppelradebene II entsprechend "aufgeteilt" ist, wie aus Fig. 1 ersichtlich.

Die erste Übersetzungsstufe 14a des Losrades 14 kämmt daher mit dem auf der ersten Triebwelle 4 angeordneten Zahnrad 12 und die zweite Übersetzungsstufe 14b des Losrades 14 kämmt mit dem auf der zweiten Triebwelle 5 angeordneten Zahnrad 13, wobei die Übersetzungsstufen 14a und 14b zueinander axial beabstandet sind.

Im Folgenden darf zunächst auf die anderen weiteren Komponenten, insbesondere auf die Zahnräder und die Synchronisiervorrichtungen des Doppelkupplungsgetriebes 1 wie folgt eingegangen bzw. diese nun näher beschrieben werden:
Weiterhin weist die zweite Getriebeeingangswelle 3 ein Zahnrad 15 auf, das als Festrad ausgebildet ist und mit einem auf der zweiten Triebwelle 5 angeordnetem und
dort als Losrad ausgebildetem Zahnrad 16 kämmt. Zudem ist auf der zweiten Getriebeeingangswelle 3 ein als Festrad ausgebildetes Zahnrad 17 vorgesehen, das mit einem auf der ersten Triebwelle 4 vorgesehenem und als Losrad ausgebildetem Zahnrad 18 kämmt. Schließlich weist die zweite Getriebeeingangswelle 3 ein als Festrad ausgebildetes Zahnrad 19 auf, das mit einem auf der zweiten Triebwelle 5 angeordnetem und als Losrad ausgebildetem Zahnrad 20 kämmt.

Folgende Gangstufen bzw. Zahnradstufen werden zumindest teilweise (mit Ausnahme der Windungsgänge) durch entsprechende Zahnradpaarungen realisiert. So bilden die Zahnräder 6 und 7 die entsprechende Zahnradpaarung zur Realisierung der neunten Gangstufe. So bilden die Zahnräder 8 und 9 die Zahnradpaarung zur Realisierung der dritten Gangstufe. So bildet das Zahnrad 13 und die Übersetzungsstufe 14b die Zahnradpaarung zur Realisierung der fünften Gangstufe und die Übersetzungsstufe 14a und das Zahnrad 12 bildet die Zahnradpaarung zur Realisierung der siebten Gangstufe. Schließlich bilden die Zahnräder 15 und 16 die Zahnradpaarung zur Realisierung der vierten Gangstufe und die Zahnräder 17 und 18 die Zahnradpaarung zur Realisierung der zweiten Gangstufe sowie die Zahnräder 19 und 20 die Zahnradpaarung zur Realisierung der sechsten Gangstufe. Mit dem Begriff "Gangstufe" sind hier im Allgemeinen die jeweiligen Vorwärtsgänge bzw. Vorwärts-Gangstufen gemeint.

Zur Realisierung der Rückwärtsgangstufe, hier insbesondere einer ersten und einer zweiten Rückwärtsgangstufe dient das Zwischenrad bzw. das Rücklaufrad 11, wobei bei der bevorzugten Ausführungsform des Doppelkupplungsgetriebes 1 die zuvor genannten beiden möglichen Rückwärtsgänge sowie auch zwei unterschiedliche erste Gangstufen und insbesondere auch die achte und zehnte Gangstufe als Windungsgänge realisiert werden, was auch der in Fig. 5 dargestellten Schalttabelle zur Schaltstellung der Synchronisiervorrichtungen S1 bis S6 zu entnehmen ist.

Die Synchronisiervorrichtung S1 bis S6 sind in der Fig. 1 dargestellt. Die hier dargestellten Synchronisiervorrichtungen S1 bis S6 befinden sich alle in Ihrer Neutralstellung. Diese können nach links ("L") sowie nach rechts ("R") entsprechend verschoben bzw. geschaltet werden, so dass bestimmte Komponenten drehwirksam miteinander verbindbar sind bzw. drehwirksam miteinander verbunden werden können.

Aus der Fig. 1 ist gut ersichtlich, dass hier die Synchronisiervorrichtung S1 die erste Triebwelle 4 in ihrer linken Schaltstellung drehwirksam verbinden kann mit dem Zahnrad 12 bzw. in ihrer rechten Schaltstellung drehwirksam verbinden kann mit dem Zahnrad 18. Die zweite Synchronisiervorrichtung S2 verbindet in ihrer rechten Schaltstellung die erste Triebwelle 4 drehwirksam mit dem Zahnrad 7 und in ihrer linken Schaltstellung die beiden Zahnräder 7 und 10. Die dritte Synchronisiervorrichtung S3 verbindet in ihrer linken Schaltstellung die erste Getriebeeingangswelle 2 drehwirksam mit dem Zahnrad 9 und in ihrer rechten Schaltstellung die erste Getriebeeingangswelle 2 drehwirksam mit dem Losrad 14. Die vierte Synchronisiervorrichtung S4 verbindet in ihrer linken Schaltstellung drehwirksam die zweite Triebwelle 5 mit dem Zahnrad 16 und in ihrer rechten Schaltstellung mit dem Zahnrad 20. Die fünfte Synchronisiervorrichtung S5 verbindet in ihrer linken Schaltstellung drehwirksam die zweite Triebwelle 5 mit dem Zahnrad 8 und in ihrer rechten Schaltstellung mit dem Zahnrad 13. Schließlich verbindet die sechste Synchronisiervorrichtung S6 in ihrer linken Schaltstellung die zweite Triebwelle 5 drehwirksam mit dem zweiten Abtriebsritzel 5.

Mit Hilfe der Ausbildung des Losrades 14 und der ersten und zweiten Übersetzungsstufe 14a bzw. 14b, die axial zueinander beabstandet sind, ist einerseits ein über die zweite Doppelradebene II zu realisierender Leistungsfluss in zwei axial voneinander beabstandete Leistungspfade aufteilbar, wobei andererseits es auch ermöglicht ist, das erste und zweite Abtriebsritzel 4a und 5a im Wesentlichen im Bereich des Losrades 14, insbesondere im Wesentlichen in der Ebene dieses Losrades 14 anzuordnen. Hierdurch ist eine flexiblere Ausgestaltung des Doppelkupplungsgetriebes 1 ermöglicht. Denkbar ist, dass die erste Übersetzungsstufe 14a gleich der zweiten Übersetzungsstufe 14b ausgeführt ist, so wie dieses im Wesentlichen aus der Fig. 1 ersichtlich, aber es ist auch denkbar, dass die erste Übersetzungsstufe unterschiedlich zur zweiten Übersetzungsstufe ausgeführt ist, insbesondere wenn andere Übersetzungen innerhalb des Doppelkupplungsgetriebes 1 realisiert werden müssen die dann für spezifische Ausführungen bzw. Anwendungsfälle eher geeignet sind.

Insbesondere zeigt die Fig. 2 die mit dem ersten und zweiten Achsantriebszahnrad 31 bzw. 32 kämmenden ersten und zweiten Abtriebsritzel 4a und 5a. Die Fig. 2 zeigt im Wesentlichen die gleichen Komponenten wie die Fig. 1 nur ohne die beiden Getriebeeingangswellen 2 und 3. Bereits aus der Fig. 2 ist damit entnehmbar, dass die - erste - Abtriebswelle 30, wobei der Begriff "erste" hier nicht einschränkend gemeint ist, im Wesentlichen horizontal gegenüber den Getriebeeingangswellen 2 und 3 liegt, wobei die erste und zweite Triebwelle 4 und 5 etwa vertikal zueinander angeordnet sind.

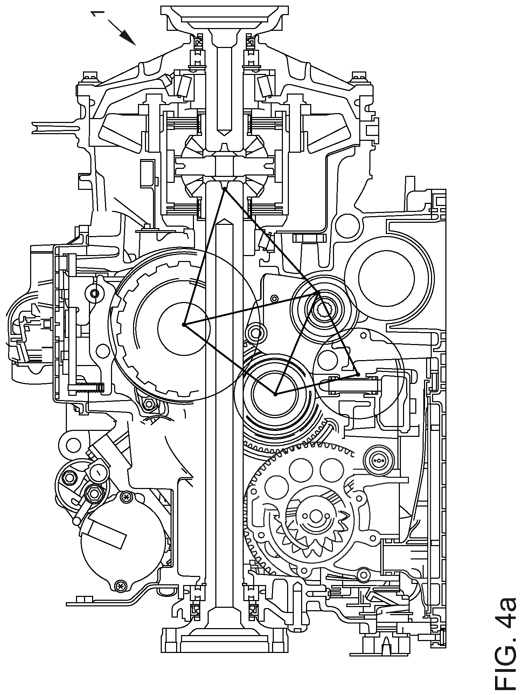

Die einzelnen Positionen der einzelnen Wellen sind insbesondere auch aus den Fig. 4a und 4b zu entnehmen, insbesondere sind die entsprechende Achsabstände der Wellen zueinander der Fig. 4b entnehmbar. Insbesondere die seitliche Anordnung der Abtriebswelle 30 neben und oberhalb der beiden Getriebeeingangswellen 2 und 3 sowie die aus den Fig. 4b erkennbaren Achsabstände A1 und A2, die im Wesentlichen gleich bzw. konstant ausgebildet sind, werden ermöglicht durch die Anordnung bzw. Ausbildung des Losrades 14. Insbesondere ist das Losrad 14 hier als eine Hohlwelle ausgebildet, wobei die beiden Übersetzungsstufen 14a und 14b als Festräder auf dieser Hohlwelle ausgebildet sind. Eine axiale Beabstandung der Übersetzungsstufen 14a bzw. 14b bzw. dieser Festräder auf dieser Hohlwelle ist dadurch leicht ermöglicht und es ist entsprechender "Raum geschaffen" zur Anordnung des ersten und zweiten Abtriebsritzels 4a und 5a.

Insbesondere aus der Fig. 2 sowie aus der Fig. 3 ist auch entnehmbar, dass das Doppelkupplungsgetriebe 1 hier insbesondere für den Längseinbau in einem Kraftfahrzeug ausgebildet ist. Eine Motoranbindung an die beiden Reibkupplungen K1 bzw. K2, die in Fig. 3 dargestellt sind, ist daher auf einfache Weise ermöglicht. Insbesondere ist in Fig. 3 auch die erste Abtriebswelle 30 erkennbar bzw. entsprechend gut dargestellt.

Insbesondere ist zusätzlich noch eine zweite Abtriebswelle 40 vorgesehen. Die zweite Abtriebswelle 40 ist insbesondere für einen weiteren Antrieb der Kraftfahrzeugräder, insbesondere für einen sogenannten "PTU-Antrieb", insbesondere für einen Vorderradantrieb ausgebildet, wobei die erste Abtriebswelle 30 insbesondere für einen Hinterradantrieb der Kraftfahrzeugräder ausgebildet ist und mit einem Differential 33 zusammenwirkt. Die zweite Abtriebswelle 40 ist über eine Stirnradübersetzung mit einem Ende der ersten Triebwelle 4 gekoppelt und liegt unterhalb der zweiten Abtriebswelle 40. In diesem konkreten Ausführungsbeispiel ist die Stirnradübersetzung an dem der Doppelkupplung zugewandten Ende der ersten Triebwelle 4 angeordnet, weil es sich um ein Getriebe für ein Mittelmotorfahrzeug handelt in dem die zweite Abtriebswelle 40 entlang des Motors nach vorne verläuft. In Fall eines Heck- oder Vornemotorfahrzeugs könnte die Stirnradübersetzung an dem anderen Ende der ersten Triebwelle 4 angeordnet werden.

Wie insbesondere aus der Fig. 3 deutlich wird, ist im Getriebegehäuse 1a des Doppelkupplungsgetriebes 1 eine Mittelplatte 1b vorgesehen bzw. angeordnet. Die Mittelplatte 1b dient zur Lagerung der Getriebeeingangswellen 2 und 3, der Triebwellen 4 und 5 und/oder der ersten Abtriebswelle 30. Die jeweiligen Wellen 2, 3, 4, 5 bzw. 30 werden durch an der Mittelplatte 1b im Wesentlichen nun in einer Ebene angeordnete Loslager 21, 22, 23 und 24 entsprechend abgestützt, so wie dies im Wesentlichen aus der Fig. 3 gut zu erkennen ist. Insbesondere können die Wellen, nämlich die zweite Getriebeeingangswelle 3, die erste und zweite Triebwelle 4 und 5 an ihren in Fig. 3 dargestellten rechten Kopfenden über jeweilige Festlager 25, 26 und 27 gut im Getriebegehäuse 1a gelagert werden. Die erste Getriebeeingangswelle 2 wird insbesondere mit einem Festlager gelagert, so dass in Kombination mit einer Fest-Fest-Lagerung der Getriebeeingangswellen 2 und 3 hier keine Axiallagerung und Einstellung mehr notwendig ist.

Das zweite Abtriebsritzel 5a ist als Losrad ausgebildet und über die sechste Synchronisiervorrichtung S6 entsprechend Schaltbar bzw. mit der zweiten Triebwelle 5 drehwirksam verbindbar. In diesem Bereich wird die Parksperre entsprechend realisiert, denn das Parksperrenrad 28 wird - wie aus Fig. 1 ersichtlich - wirksam mit dem zweiten Abtriebsritzel 5a verbunden bzw. als integraler Bestandteil des zweiten Abtriebsritzels 5a ausgebildet. In das Parksperrenrad 28 kann die Parksperre 29 entsprechend blockierend aus- oder eingreifen.

Insbesondere die Fig. 4a und 4b machen noch einmal die durch die Anordnung/Ausbildung des Losrades 14 mit den beiden Übersetzungsstufen 14a und 14b realisierten Vorteile deutlich. In Fig. 4a und 4b ist die entsprechende Beabstandung der einzelnen Wellen zueinander dargestellt, insbesondere aus der Fig. 4b entsprechend ersichtlich. Es ist deutlich erkennbar, dass der Abstand A₁ und A₂ der ersten und zweiten Triebwelle 4 und 5 zur Abtriebswelle 30 im Wesentlichen gleich ist (A₁ ungefähr gleich A₂). Auch ist ersichtlich, so wie in Fig. 4b dargestellt, hier die erste und zweite Triebwelle 4 und 5 im Wesentlichen in einer Ebene und hierzu die Getriebeeingangswellen 2 und 3 und die erste Abtriebswelle 30 in einer hierzu um 90° Grad versetzten Ebene angeordnet sind. Schließlich ist auch aus der Fig. 4b ersichtlich, dass das Rücklaufrad 11 ebenfalls mit nahezu gleichen Abständen zu den Getriebeeingangswellen 2 und 3 bzw. zur ersten Triebwelle 4 beabstandet ist.

Schließlich ist aus der in Fig. 5 dargestellten Schalttabelle die Positionierung der einzelnen Synchronisiervorrichtungen S1 bis S6 (nach links verschoben "L", in der Neutralposition sich befindend "N" bzw. nach rechts verschoben "R") entsprechend dargestellt, so dass die einzelnen Gangstufen insbesondere hier insgesamt zehn Vorwärtsgangstufen realisierbar sind, wobei zwei unterschiedliche Rückwärtsgangstufen, zwei unterschiedliche erste Gangstufen und zwei unterschiedliche zehnte Gangstufen realisierbar sind, so wie aus der Schalttabelle in Fig. 5 ersichtlich.

Es darf darauf hingewiesen werden, dass die erste Reibkupplung K1 mit der ersten äußeren Getriebeeingangswelle 2 und die zweite Reibkupplung K2 mit der zweiten inneren Getriebeeingangswelle 3 verbindbar ist und in der Schalttabelle der Fig. 5 im Wesentlichen für den jeweiligen Schaltzustand immer nur die geschlossene Kupplung (K1 oder K2) in der entsprechenden Spalte genannt ist.

Aus den in Fig. 5 dargestellten Kombinationen sind die jeweiligen Vorwärtsgänge insbesondere Gangstufen entsprechend durch die jeweiligen Schaltstellungen der Synchronisiervorrichtungen S1 bis S6 ersichtlich dargestellt, wobei die beiden zu realisierenden Rückwärtsgänge R1 und R2 als Windungsgänge, die beiden möglichen unterschiedlichen ersten Gangstufen 1.1 bzw. 1.2 ebenfalls als Windungsgänge sowie die achte Gangstufe als Windungsgang und die beiden Möglichkeiten für eine zehnte Gangstufe (10.1 bzw. 10.2) als Windungsgang ausgeführt bzw. realisiert ist. Hierauf darf explizit daher nochmals hingewiesen werden, da die entsprechenden Komponenten gemäß der Schalttabelle in Fig. 5 schaltbar und damit die einzelnen Gangstufen und Windungsgänge bzw. durch die jeweiligen Schaltstellungen der Synchronisiervorrichtungen S1 bis S6 die jeweiligen Leistungsflüsse der einzelnen Gangstufen bzw. bestimmter als Windungsgänge ausgebildeter Gangstufen realisierbar sind.

## Patentansprüche

1. Doppelkupplungsgetriebe (1) für ein Kraftfahrzeug mit einer ersten Getriebeeingangswelle (2), mit einer zweiten Getriebeeingangswelle (3), mit zwei Triebwellen (4, 5), mit mehreren Zahnrädern (6 - 20) und mit mehreren Synchronisiervorrichtungen (S1 - S6), wobei die erste Getriebeeingangswelle (2) über eine erste Reibkupplung (K1) und die zweite Getriebeeingangswelle (3)über eine zweite Reibkupplung (K2) mit einem Antriebsmotor verbindbar oder verbunden ist, wobei die Zahnräder (6 - 20) derart kämmend angeordnet sind, dass mehrere Vorwärtsgänge mittels der Synchronisiervorrichtungen (S1 - S6) schaltbar sind, wobei mindestens ein Vorwärtsgang als Windungsgang ausgebildet ist, wobei sich ein Leistungsfluss des Windungsganges über mehrere Zahnradstufen windet, wobei bestimmte Zahnräder (8, 9, 10, 11 bzw. 12, 14a, 13, 14b) mindestens zwei Doppelradebenen (I, II) bilden, und wobei die erste Triebwelle (4) ein erstes Abtriebsritzel (4a) und die zweite Triebwelle (5) ein zweites Abtriebsritzel (5a) aufweist, wobei mindestens eine Doppelradebene (II) aufgeteilt ausgebildet ist, nämlich diese aufgeteilte Doppelradebene (II) ein auf einer der beiden Getriebeeingangswellen (2, 3) angeordnetes Losrad (14) mit zwei separat ausgebildeten Übersetzungsstufen (14a, 14b) aufweist, **dadurch gekennzeichnet, dass** das erste und das zweite Abtriebsritzel (4a, 4b) in der Ebene des Losrades (14) angeordnet sind, nämlich zwischen den beiden Übersetzungsstufen (14a, 14b) des Losrades, und dass das erste und das zweite Abtriebsritzel (4a, 4b) jeweils mit einem seperatem, auf einer ersten Abtriebswelle (30) angeordnetem Achsantriebszahnrad (31, 32) kämmen.

2. Doppelkupplungsgetriebe nach Anspruch 1, **dadurch gekennzeichnet, dass** die erste Übersetzungsstufe (14a) des Losrades (14) mit einem auf der ersten Triebwelle (4) angeordnetem Zahnrad (12) und die zweite Übersetzungsstufe (14b) mit einem auf der zweiten Triebwelle (5) angeordnetem Zahnrad (13) kämmt.

3. Doppelkupplungsgetriebe nach einem der vorstehenden Ansprüche, **dadurch gekennzeichnet, dass** die erste Übersetzungsstufe (14a) gleich der zweiten Übersetzungsstufe (14b) ausgeführt ist.

4. Doppelkupplungsgetriebe nach einem der vorstehenden Ansprüche, **dadurch gekennzeichnet, dass** die erste Übersetzungsstufe (14a) unterschiedlich zur zweiten Übersetzungsstufe (14b) ausgeführt ist.

5. Doppelkupplungsgetriebe nach einem der vorstehenden Ansprüche, **dadurch gekennzeichnet, dass** die Getriebeeingangswellen (2, 3) und die erste Abtriebswelle (30) im Wesentlichen horizontal zueinander und die erste und zweite Triebwelle (4, 5) im Wesentlichen vertikal zueinander angeordnet sind, wobei die Achsabstände (A1, A2) der beiden Triebwellen zur Abtriebswelle (30) und/oder zum Differential (33) im Wesentlichen gleich ausgebildet sind.

6. Doppelkupplungsgetriebe nach einem der vorstehenden Ansprüche, **dadurch gekennzeichnet, dass** das Losrad (14) als eine Hohlwelle ausgebildet ist und die beiden Übersetzungsstufen (14a, 14b) als Festräder auf der Hohlwelle ausgebildet sind.

7. Doppelkupplungsgetriebe nach einem der vorstehenden Ansprüche, **dadurch gekennzeichnet, dass** eine zweite Abtriebswelle (40) vorgesehen ist, insbesondere die erste Abtriebswelle (30) für einen Hinterradantrieb und die zweite Abtriebswelle (40) für einen Vorderradantrieb vorgesehen ist.

8. Doppelkupplungsgetriebe nach einem der vorstehenden Ansprüche, **dadurch gekennzeichnet, dass** in einem Getriebegehäuse (1a) eine Mittelplatte (1b) zur Lagerung der Getriebeeingangswellen (2, 3), der Triebwellen (4, 5) und/oder der ersten Abtriebswelle (30) vorgesehen ist, wobei die jeweiligen Wellen durch an der Mittelplatte (1b) im Wesentlichen in einer Ebene angeordneten Loslagern (21, 22, 23, 24) gelagert bzw. entsprechend abgestützt sind.

9. Doppelkupplungsgetriebe nach einem der vorstehenden Ansprüche, **dadurch gekennzeichnet, dass** das zweite Abtriebsritzel (5a) als Losrad auf der zweiten Triebwelle (5) angeordnet ist, wobei die Parksperrenfunktion mit Hilfe des zweiten Abtriebsritzel (5a) realisierbar ist.

10. Doppelkupplungsgetriebe nach einem der vorstehenden Ansprüche, **dadurch gekennzeichnet, dass** ein Rückwärtsgang, die erste Gangstufe, die achte Gangstufe und/oder die zehnte Gangstufe als Windungsgang ausgeführt ist bzw. sind.

## Claims

1. A double clutch transmission (1) for a motor vehicle with a first transmission input shaft (2), with a second transmission input shaft (3), with two drive shafts (4, 5), with a plurality of gear wheels (6 - 20) and with a plurality of synchronizing devices (S1 - S6), wherein the first transmission input shaft (2) can be connected or is connected via a first friction clutch (K1) and the second transmission input shaft (3) via a second friction clutch (K2) to a drive motor, wherein the gear wheels (6 - 20) are arranged meshing in such a manner that a plurality of forward gears are switchable by means of the synchronizing devices (S1 - S6), wherein at least one forward gear is designed as a winding path gear, wherein a power flow of the winding path gear winds over several gearwheel stages, wherein specific gear wheels (8, 9, 10, 11 or 12, 14a, 13, 14b) form at least two double-wheel planes (I, II) and wherein the first drive shaft (4) has a first output pinion (4a) and the second drive shaft (5) has a second output pinion (5a), wherein at least one double-wheel plane (II) is designed divided, namely this divided double-wheel plane (II) has a loose wheel (14) arranged on one of the two transmission input shafts (2, 3) with two separately formed gear ratios (14a, 14b), **characterized in that** the first and the second output pinion (4a, 4b) is arranged in the plane of the loose wheel (14), namely between the two transmission ratios (14a, 14b) of the loose wheel, and that the first and the second output pinion (4a, 4b) in each case mesh with a separate axle drive gear wheel (31, 32) arranged on a first output shaft (30).

2. The double clutch transmission according to Claim 1, **characterized in that** the first transmission ratio (14a) of the loose wheel (14) meshes with a gear wheel (12) arranged on the first drive shaft (4) and the second transmission ratio (14b) meshes with a gear wheel (13) arranged on the second drive shaft (5).

3. The double clutch transmission according to any one of the preceding claims, **characterized in that** the first transmission ratio (14a) is designed the same as the second transmission ratio (14b).

4. The double clutch transmission according to any one of the preceding claims, **characterized in that** the first transmission ratio (14a) is designed differently from the second transmission ratio (14b)

5. The double clutch transmission according to any one of the preceding claims, **characterized in that** the transmission input shafts (2, 3) and the first output shaft (30) are arranged substantially horizontally with respect to one another and the first and second drive shafts (4, 5) are arranged substantially vertically with respect to one another, wherein the axle distances (A1, A2) of the two drive shafts to the output shafts (30) and/or to the differential (33) are designed substantially the same.

6. The double clutch transmission according to any one of the preceding claims, **characterized in that** the loose wheel (14) is designed as a hollow shaft and the two transmission ratios (14a, 14b) are designed as fixed wheels on the hollow shaft.

7. The double clutch transmission according to any one of the preceding claims, **characterized in that** a second output shaft (40) is provided, in particular the first output shaft (30) is provided for a rear-wheel drive and the second output shaft (40) is provided for a front-wheel drive.

8. The double clutch transmission according to any one of the preceding claims, **characterized in that** in the transmission housing (1a) a central plate (1b) is provided for mounting the transmission input shafts (2, 3), the drive shafts (4, 5) and/or the first output shaft (30), wherein the respective shafts are mounted or correspondingly supported by movable bearings (21, 22, 23, 24) arranged on the central plate (1b) substantially in a plane.

9. The double clutch transmission according to any one of the preceding claims, **characterized in that** the second output pinion (5a) is arranged as a loose wheel on the second drive shaft (5), wherein the parking lock function can be realized with the aid of the second output pinion (5a).

10. The double clutch transmission according to any one of the preceding claims, **characterized in that** a reverse gear, the first gear ratio, the eighth gear ratio and/or the tenth gear ratio is or are designed as a winding path gear.

## Revendications

1. Boîte de vitesses à double embrayage (1) pour un véhicule automobile avec un premier arbre d'entrée de boîte de vitesses (2), avec un deuxième arbre d'entrée de boîte de vitesses (3), avec deux arbres d'entraînement (4, 5), avec plusieurs roues dentées (6 - 20) et avec plusieurs dispositifs de synchronisation (S1 - S6), le premier arbre d'entrée de boîte de vitesses (2) pouvant être relié ou étant relié, par l'intermédiaire d'un premier embrayage à friction (K1) et le deuxième arbre d'entrée de boîte de vitesses (3) pouvant être relié ou étant relié, par l'intermédiaire d'un deuxième embrayage à friction (K2), avec un moteur d'entraînement, les roues dentées (6 - 20) s'engrenant de façon à ce que plusieurs rapports de marche avant puissent être enclenchés au moyen des dispositifs de synchronisation (S1 - S6), au moins un rapport de marche avant étant conçu comme un rapport d'enroulement, un flux de puissance du rapport d'enroulement s'enroulant sur plusieurs étages à roues dentées, certaines roues dentées (8, 9, 10, 11 ou 12, 14a, 13, 14b) constituant au moins deux niveaux à doubles roues (I, II) et le premier arbre d'entraînement (4) comprenant un premier pignon de sortie (4a) et le deuxième arbre d'entraînement (5) comprenant un deuxième pignon de sortie (5a), au moins un niveau à double roue (II) étant conçu de manière divisée, ce niveau à double roue (II) divisé comprenant une roue libre (14) disposée sur un des deux arbres d'entrée de boîte de vitesses (2, 3) avec deux étages de démultiplication (14a, 14b) réalisés séparément, **caractérisée en ce que**
les premier et deuxième pignons de sortie (4a, 4b) sont disposés dans le niveau de la roue libre (14), à savoir entre les deux étages de démultiplication (14a, 14b) de la roue libre, et **en ce que** les premier et deuxième pignons de sortie (4a, 4b) s'engrènent chacun avec une roue dentée d'entraînement d'axe (31, 32) séparée, disposée sur un premier arbre de sortie (30).

2. Boîte de vitesses à double embrayage selon la revendication 1, **caractérisée en ce que** le premier étage de démultiplication (14a) de la roue libre (14) s'engrène avec une roue dentée (12) disposée sur le premier arbre d'entraînement (4) et le deuxième étage de démultiplication (14b) s'engrène avec une roue dentée (13) disposée sur le deuxième arbre d'entraînement (5).

3. Boîte de vitesses à double embrayage selon l'une des revendications précédentes, **caractérisée en ce que** le premier étage de démultiplication (14a) est réalisée de manière identique au deuxième étage de démultiplication (14b).

4. Boîte de vitesses à double embrayage selon l'une des revendications précédentes, **caractérisée en ce que** le premier étage de démultiplication (14a) est réalisée de manière différente du deuxième étage de démultiplication (14b).

5. Boîte de vitesses à double embrayage selon l'une des revendications précédentes, **caractérisée en ce que** les arbres d'entrée de boîte de vitesses (2, 3) et le premier arbre de sortie (30) sont disposés de manière globalement horizontale entre eux et les premier et deuxième arbres d'entraînement (4, 5) sont disposés de manière globalement verticale entre eux, les entraxes (A1, A2) des deux arbres d'entraînement par rapport à l'arbre de sortie (30) et/ou au différentiel (33) étant globalement identiques.

6. Boîte de vitesses à double embrayage selon l'une des revendications précédentes, **caractérisée en ce que** la roue libre (14) est conçue comme un arbre creux et les deux étages de démultiplication (14a, 14b) sont conçus comme des roues fixes sur l'arbre creux.

7. Boîte de vitesses à double embrayage selon l'une des revendications précédentes, **caractérisée en ce qu'**un deuxième arbre de sortie (40) est prévu, plus particulièrement le premier arbre de sortie (30) est prévu pour un entraînement de roue arrière et le deuxième arbre de sortie (40) est prévu pour un entraînement de roue avant.

8. Boîte de vitesses à double embrayage selon l'une des revendications précédentes, **caractérisée en ce que**, dans un carter de boîte de vitesses (1a) est prévue une plaque centrale (1b) pour le logement des arbres d'entrée de boîte de vitesses (2, 3), des arbres d'entraînement (4, 5) et/ou de premier arbre de sortie (30), les différents arbres étant logés ou soutenus de manière appropriée par des paliers libres (21, 22, 23, 24) disposés sur la plaque centrale (1a), globalement dans un plan.

9. Boîte de vitesses à double embrayage selon l'une des revendications précédentes, **caractérisée en ce que** le deuxième pignon de sortie (5a) est disposé, en tant que roue libre, sur le deuxième arbre d'entraînement (5), la fonction de frein de stationnement pouvant être réalisée à l'aide du deuxième pignon de sortie (5a).

10. Boîte de vitesses à double embrayage selon l'une des revendications précédentes, **caractérisée en ce qu'**un rapport de marche arrière, le premier rapport, le huitième rapport et/ou le dixième rapport est ou sont conçus comme un ou des rapports(s) d'enroulement.
